# EUROPEAN PATENT APPLICATION

(11) **EP 2 360 038 A1**
(43) Date of publication of application: **24.08.2011**
(21) Application number: 09827685.0
(22) Date of filing: 04.11.2009
(51) Int. Cl.: B60G 17/00

(54) **VIBRATION GENERATING WHEEL FOR VEHICLE**

(30) Priority: 19.11.2008 KR 20080115416
(71) Applicant: Youn, Kuk-Jin, Chungcheongnam-do 339-872 (KR); Yoon, Sung-Jin, Jeonbuk 580-751 (KR)
(72) Inventor: Youn, Kuk-Jin, Chungcheongnam-do 339-872 (KR); Yoon, Sung-Jin, Jeonbuk 580-751 (KR)
(74) Representative: Hocking, Adrian Niall
(86) International application number: PCT/KR2009/006453
(87) International publication number: WO 2010/058920

(57) **Abstract**

Provided is a vibration generating wheel for a vehicle, for measuring vibration characteristics of a vehicle and a tire of the vehicle by applying vibrations to the tire of the vehicle while the vehicle load is applied. The vibration generating wheel includes a first fixed wheel and a second fixed wheel formed on a rotating shaft that is connected to and is rotated integrally with a drive motor, and supporting rods formed between the first fixed wheel and the second fixed wheel to support a tire. The support shafts are rotated by rotation of the drive motor to apply vibrations to the tire.

## Description

### BACKGROUND OF THE INVENTION

### 1. Field of the Invention

The present invention relates generally to a vibration generating wheel for a vehicle, capable of applying vibrations to a vehicle and a tire of the vehicle while the vehicle load is applied.

### 2. Description of the Related Art

The present invention relates generally to a vibration generating wheel for a vehicle, capable of applying vibrations to a vehicle and a tire of the vehicle while the vehicle load is applied, and to a vibration generating wheel for a vehicle capable of applying vibrations to a vehicle and a tire of the vehicle by rotating support rods supporting the tire of the vehicle, and controlling vibration frequency by controlling the number of support rods.

In general, vibrations are transmitted from the ground through a vehicle's tires and suspension to the occupants of the vehicle. A smooth and comfortable ride for a vehicle can be achieved by mounting tires that transmit a minimal amount of road vibrations to passengers. In order to manufacture such tires, there is the need to obtain a preferable free vibration spectrum of a tire through measurement and analysis of the tire's free vibration mode and vibration transmission characteristics (vibration acceleration).

The free vibration mode of a tire can be obtained through conversions performed with predetermined computer software on vibration acceleration measured by a vibration accelerometer (hereinafter referred to as 'accelerometer') installed at the tread surface of the tire, and the vibration transmission characteristics of a tire (or the vibration acceleration transmitted from the ground surface to the chassis) can be measured using an accelerometer installed at the suspension of the vehicle. The measured values can be entered into a predetermined formula for vibration characteristics to determine a free vibration spectrum of the tire for a comfortable ride and low noise.

In order to measure the vibration characteristics of a vehicle's tire and various other components as described above, a certain vibrating force is repeatedly applied to the vehicle or the vehicle's tire, and the vibration characteristics of the vehicle and the tire that are vibrated by the vibrating force can then be obtained. Various vibration generating devices for repeatedly applying a predetermined vibrating force to a vehicle or tire of a vehicle are being conceived.

### SUMMARY OF THE INVENTION

An object of the present invention is to substantially solve at least the above problems and/or disadvantages and to provide at least the advantages below. Accordingly, an object of the present invention is to overcome the extremely inconvenient requirement in related art vibration generating devices for applying vibration to vehicles and vehicle tires of having to raise the vehicle to perform settings in order to measure required variables, and to overcome the need to replace or reinstall a vibration generating device according to a different vehicle type or different vehicle tire width.

Another object of the present invention is to overcome the limitation of related art vibration generating devices being unable to retain the ability to apply a uniform level of vibration to a vehicle or a vehicle's tire when the weight of the vehicle is applied, due to a reduced ability from prolonged use to support vehicle weight, and also overcome the limitations of a vehicle being shaken severely and dislodged from its fixed position or excessive tire wear occurring when a large amount of vibration is applied to the vehicle.

According to an aspect of the present invention, a vibration generating wheel for a vehicle includes: a rotating shaft connected to a drive motor; a first fixed wheel formed on the rotating shaft; a second fixed wheel formed on the rotating shaft at a predetermined distance apart from the first fixed wheel; and at least 3 support rods formed between the first fixed wheel and the second fixed wheel to support a vehicle tire, and apply vibrations to the tire by rotating in concert with the first fixed wheel and the second fixed wheel.

The vibration generating wheel may further include a guide disk disposed on the rotating shaft at a predetermined distance from the second fixed wheel, wherein the supporting rods may be formed between the first fixed wheel and the guide disk, and the second fixed wheel may be moved between the first fixed wheel and the guide disk by moving means, to adjust a distance between the first fixed wheel and the second fixed wheel according to a width of the tire.

### BRIEF DESCRIPTION OF THE DRAWINGS

The above and other objects, features and advantages of the present invention will become more apparent from the following detailed description when taken in conjunction with the accompanying drawings in which:
FIG. 1 is an exploded perspective view of a vibration generating wheel for a vehicle according to an embodiment of the present invention;
FIG. 2 is a perspective view of a vibration generating wheel for a vehicle according to another embodiment of the present invention;
FIG. 3 is a sectional view of a vibration generating wheel for a vehicle according to another embodiment of the present invention;
FIG. 4 is a perspective view showing a vibration generating wheel for a vehicle according to another embodiment of the present invention;
FIGS. 5A and 5B are mimetic diagrams shown the rotation of a vibration generating wheel for a vehicle applying vibrations to a vehicle tire, according to another embodiment of the present invention;
FIGS. 6 to 8 are an exploded perspective view, perspective views, and a sectional view of a vibration generating wheel for a vehicle according to another embodiment of the present invention;
FIGS. 9A and 9B are views showing a vibration generating wheel in use according to the tire width of a vehicle; and
FIGS. 10A and 10B are a perspective view and a sectional view of a vibration generating wheel for a vehicle according to another embodiment of the present invention.

### DETAILED DESCRIPTION OF THE PREFERRED EMBODIMENTS

The present invention relates generally to a vibration generating wheel for a vehicle, capable of applying vibrations to a vehicle and a tire of the vehicle while the vehicle load is applied, and particularly, to a vibration generating wheel for a vehicle, including a first fixed wheel and a second fixed wheel formed on a rotating shaft that is connected to and is rotated integrally with a drive motor, and supporting rods formed between the first fixed wheel and the second fixed wheel to support a tire. The support shafts formed between the first fixed wheel and second fixed wheel are rotated by rotation of the drive motor to apply vibrations to the tire and vehicle.

A detailed description of a vibration generating wheel for a vehicle according to embodiments will be provided below with reference to the drawings.

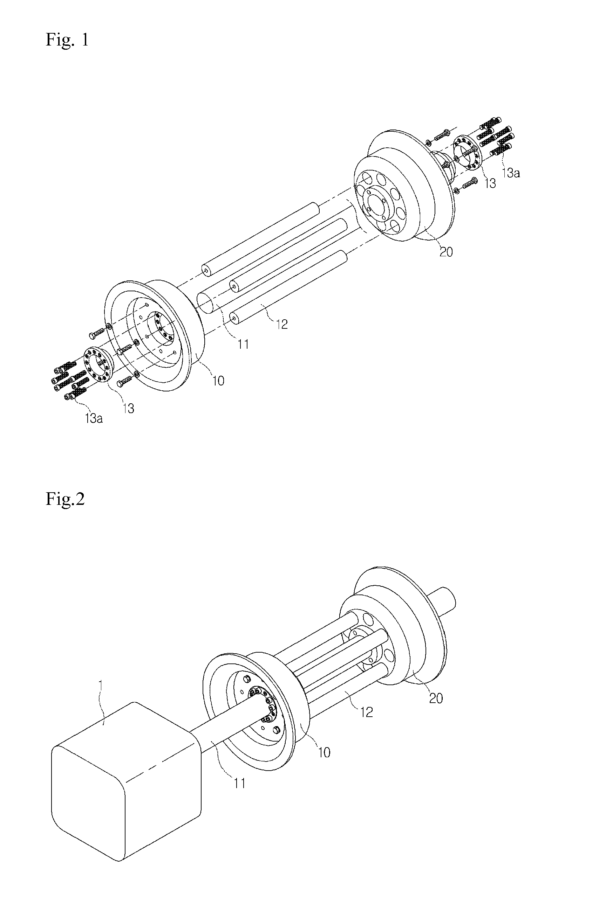

FIGS. 1 to 3 are an exploded perspective view, a perspective view, and a sectional view of a vibration generating wheel for a vehicle according to embodiments of the present invention. First, a vibration generating wheel for a vehicle according to embodiments of the present invention includes a drive motor 1 for imparting rotational force, a rotating shaft 11 connected at one end to the drive motor 1 to be rotated by the rotational force of the drive motor 1, a first fixed wheel 10 formed on one side of the rotating shaft 11, a second fixed wheel 20 formed on the rotating shaft 11 and spaced a predetermined distance apart from the first fixed shaft 10, and at least 3 support rods 12 formed between the first fixed wheel 10 and the second fixed wheel 20 to support a vehicle tire 100, and rotated together with the first fixed wheel 10 and second fixed wheel 20 to apply vibrations to the tire 100.

In particular, the first fixed wheel 10 is inserted over the rotating shaft 11 connected to and rotated by the drive motor 1, and is fixed to the rotation shaft 11 by means of a power lock 13. The second fixed wheel 20 is formed on the rotating shaft 11 at a predetermined distance apart from the first fixed wheel 10 (the width of the vehicle tire 100), and at least 3 of the support rods 12 between the first fixed wheel 10 and the second fixed wheel 20 are formed at uniform distances apart around peripheries of the first fixed wheel 10 and the second fixed wheel 20.

The support rods 12 formed between the first fixed wheel 10 and the second fixed wheel 20 may be altered in number to alter the frequency of vibrations during vibration generations. The number of at least 3 is provided to prevent the vehicle tire 100 from dropping between one support rod 12 and another support rod 12 and coming into contact with the rotating shaft 11 when the rotating speed of the rotating shaft 11 is slow.

The power lock 13 is for providing vertical components of force to the rotating shaft 11 and the first fixed wheel 10, so that the first fixed wheel 10 does not slip and can receive the driving force of the rotating shaft 11, through tightening bolts 13a in pairs of tapered female/male parts to tightly fit the first fixed wheel 10 and transmit power from the rotating shaft 11.

The first fixed wheel 10 and the second fixed wheel 20 are shaped as vehicle wheels that have good rotating ability, are formed symmetrically at the left and right sides on the rotating shaft 11 to fit snugly against a vehicle tire 100 in the middle, and prevent lateral undulation of the vehicle tire 10 causing movement of the vehicle. In particular, the perimeters of the mutually-facing surfaces of the first fixed wheel 10 and the second fixed wheel 20 - that is, the perimeters of the surfaces that press against the tire 100 - are sloped, so that when the tire 100 is moved through vibrations to the upper portion of the first fixed wheel 10 or second fixed wheel 20, the tire 100 is made to slip on the sloped portions of the first fixed wheel 10 and second fixed wheel 20 and be retained seated on the support rods 12 formed between the first fixed wheel 10 and second fixed wheel 20.

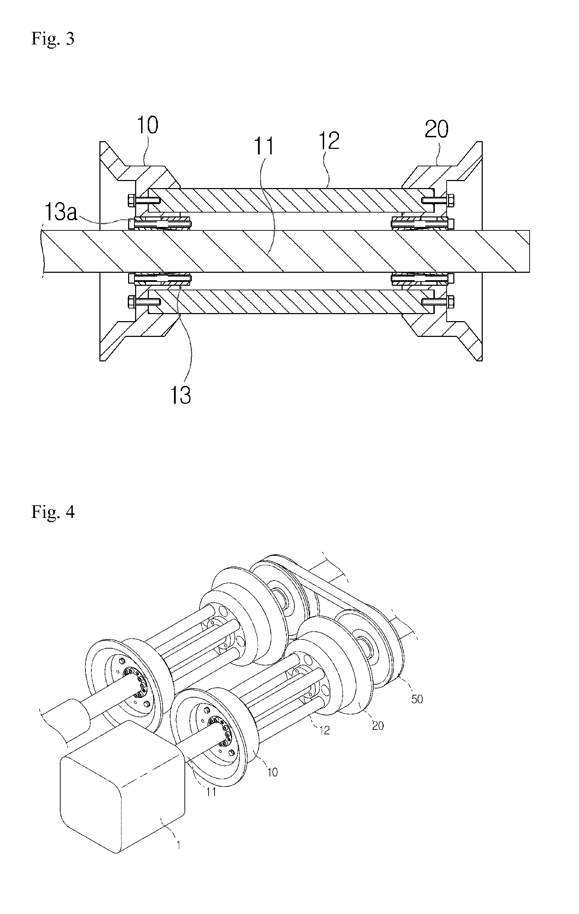

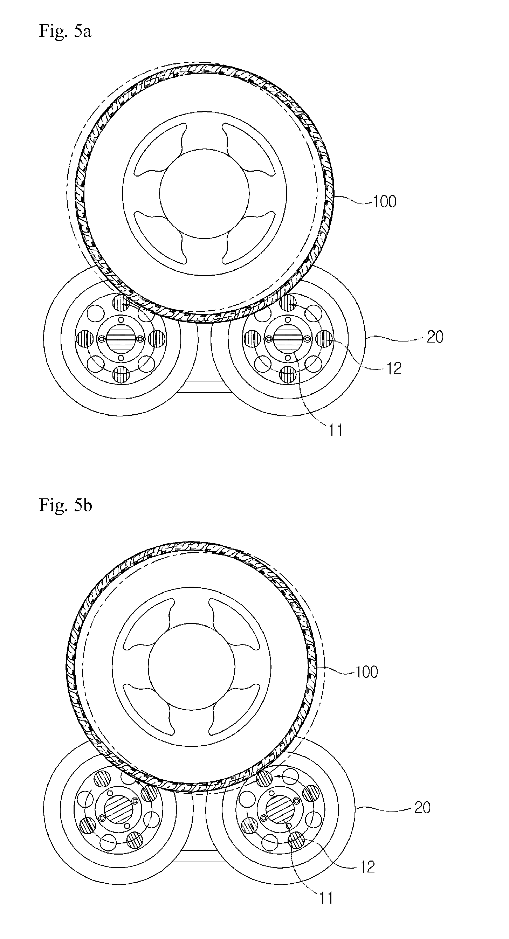

FIGS. 4 to 5B show a vibration generating wheel for a vehicle configured as above according to embodiments, where vibration generating wheels are positions a predetermined distance apart at the front and rear of the vehicle tire 100, and the vehicle tire 100 is supported by the support rods 12 of a front vibration generating wheel and the support rods 12 of a rear vibration generating wheel.

Specifically, vibration generating wheels for a vehicle according to an embodiment apply vibrations to a tire 100 itself with the vehicle weight applied. First, a pair of vibration generating wheels is formed according to an embodiment, and the wheels are installed at the front and rear, respectively, of a vehicle tire 100, and the rotating shaft 11 of each of the pair of vibration generating wheels at the front and rear of the tire are rotated by a drive motor 1, to rotate the support rods 12 supporting the tire 100 between the first fixed wheels 10 and second fixed wheels 20, thereby applying vibration to the tire 100.

The rotating shafts 11 of the pair of vibration generating wheels formed at the front and rear of the tire 100 are connected by pulleys 50 and a belt, enabling one drive motor 1 to be used to simultaneously rotate the rotating shafts 11 of both the pair of vibration generating wheels formed at the front and rear of the tire 100, thereby saving power consumed by rotating a drive motor 1.

For example, to apply vibration to tires of a 4-wheeled vehicle, vibration generating wheels according to embodiments are installed in juxtaposition at the front and rear of each tire 100 of the vehicle, and the vehicle tires 100 are supported on the support rods 12 formed on the pairs of vibration generating wheels at the front and rear of the tires.

When a drive motor 1 is connected to one rotating shaft 11 from a pair of rotating shafts 11 to rotate the rotating shaft 11, each of the pair of rotating shafts 11 is rotated simultaneously by being connected through the pulleys 50, to simultaneously rotate the first fixed wheels 10, the second fixed wheels 20, and the support rods 12 of the pairs of vibration generating wheels at the front and rear of a tire 100. Thus, vibrations are applied to the tire 100 resting on the support rods 12 from continuous rotation that moves a support rod 12 from below a rotating shaft 11 to above the rotating shaft 11, so that the tire 100 is moved vertically and forward and rearward to vibrate.

A vibration generating wheel for a vehicle according to embodiments can control the vibration frequency and force when generating vibrations by controlling the number of support rods 12 formed between the first fixed wheel 10 and the second fixed wheel 20 and the rotating speed. When a greater number of support rods 12 is provided, the number of times (frequency) that the support rods 12 contact the tire 100 per revolution of the rotating shaft 11 increases, to correspondingly increase the number of vibrations of the tire 100.

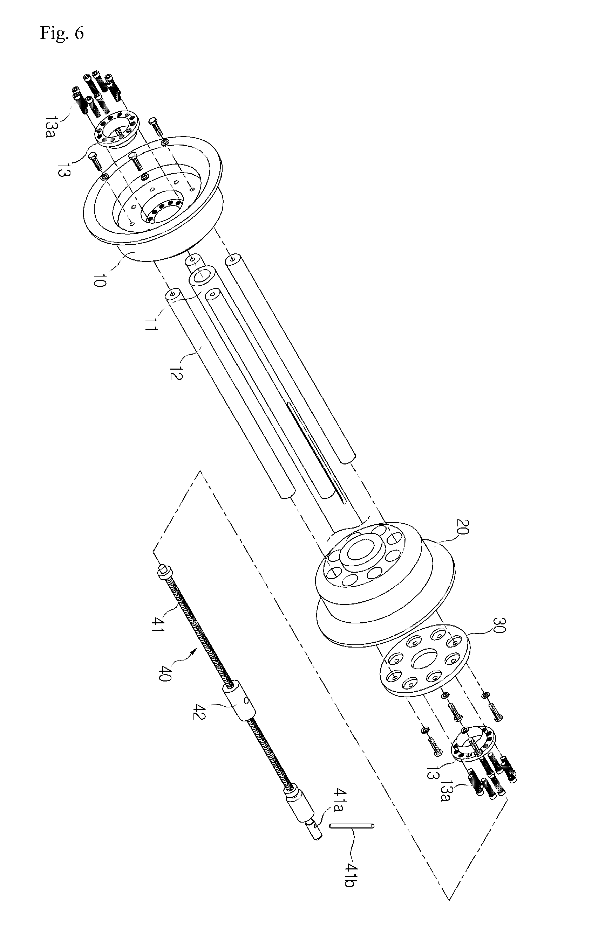

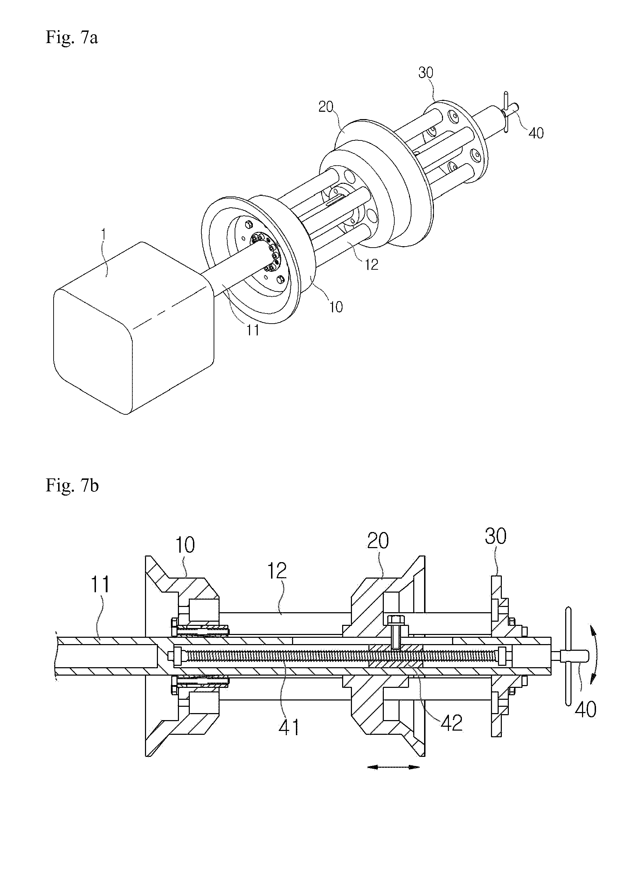

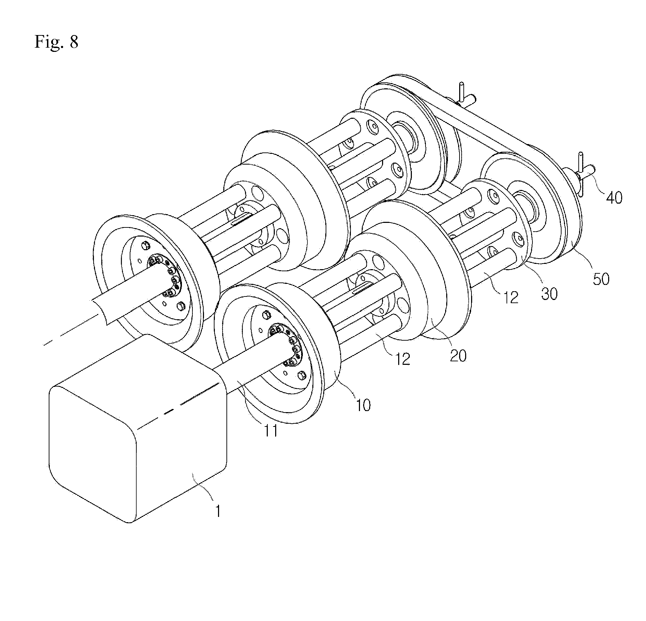

Next, FIGS. 6 to 9B illustrate other embodiments of the present invention, in which a first fixed wheel 10 is formed at a side of a rotating shaft 11, a round plate-shaped guide disk 30 is formed at the other side, a second fixed wheel 20 is disposed between the first fixed wheel 10 and the guide disk 30, and support rods 12 formed between the first fixed wheel 10 and second fixed wheel 20 pass through the second fixed wheel 20 and extend to the guide disk 30.

In this configuration, moving means 40 (to be described below) are used to move the second fixed wheel 20 between the first fixed wheel 10 and the guide disk 30 to adjust the distance between the first fixed wheel 10 and the second fixed wheel 20, according to the width of a tire 100 supported on the support rods 12 between the first fixed wheel 10 and the second fixed wheel 20.

Specifically, because the widths of tires 100 currently used vary widely according to the characteristics and purpose of vehicles, the vibration generating wheel for a vehicle according to embodiments allows the distance between the first fixed wheel 10 and second fixed wheel 20 where a tire 100 is positioned to be adjusted according to various tire 100 widths without the need to change equipment, so that the vibration generating wheel for a vehicle according to embodiments may be freely used despite various vehicle sizes and tire widths.

As described above, after the second fixed wheel 20 is moved between the first fixed wheel 10 and the guide disk 30 by the moving means 40 according to the width of the tire 100, it is fixed by a locking device such as the power lock 13 described above. Here, the moving means 40 is formed to include a rotating rod 41 inserted inside the hollow rotating shaft 11 and defining screw threads in its outer periphery, and a moving body 42 screw-coupled to the rotating rod 41 and fastened to the second fixed wheel 20 to move the second fixed wheel 20 according to the rotation of the rotating rod 41.

Specifically, the rotating shaft 11 is hollow inside and has open ends, and the rotating rod 41 defining screw threads in its outer periphery is inserted into the hollow rotating shaft 11. Also, both ends of the rotating rod 41 are fixed within the rotating shaft 11 by bearings, etc., so that if the rotating rod 41 1 is rotated, it does not move within the rotating shaft 11 and only rotates in place.

Also, an end of the rotating rod 41 projects a predetermined length from the rotating shaft 11, a through-hole 41a is defined in the projecting portion, and a rod handle 41b for facilitating rotation of the rotating rod 41 is coupled to the through-hole 41a, so that by turning the rod handle 41b, the rotating rod 41 can be easily rotated.

The moving body 42 has a screw hole defined therein and is screw-coupled to the rotating rod 41, and is inserted into the rotating shaft 11 together with the rotating rod 41. The moving body 42 moves along the rotating rod 41 within the rotating shaft 11 according to rotation of the rotating rod 41. The moving body 42 is connected to the second fixed wheel 20 by a fixing screw that passes through the rotating shaft 11, so that when the rotating rod 41 is rotated, the moving body 42 is moved along the rotating rod 41 and moves the second fixed wheel 20 between the first fixed wheel 10 and the guide disk 30.

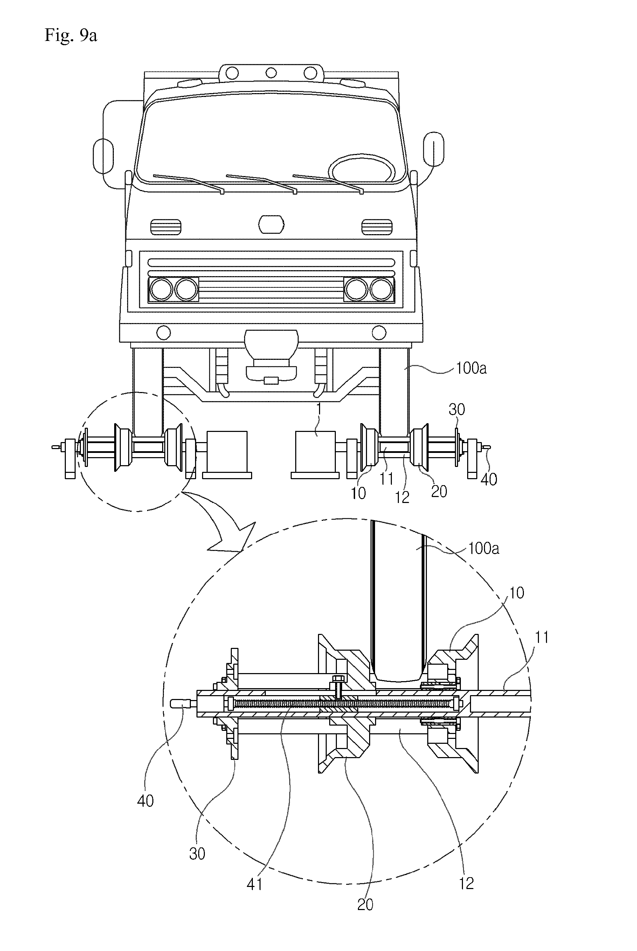

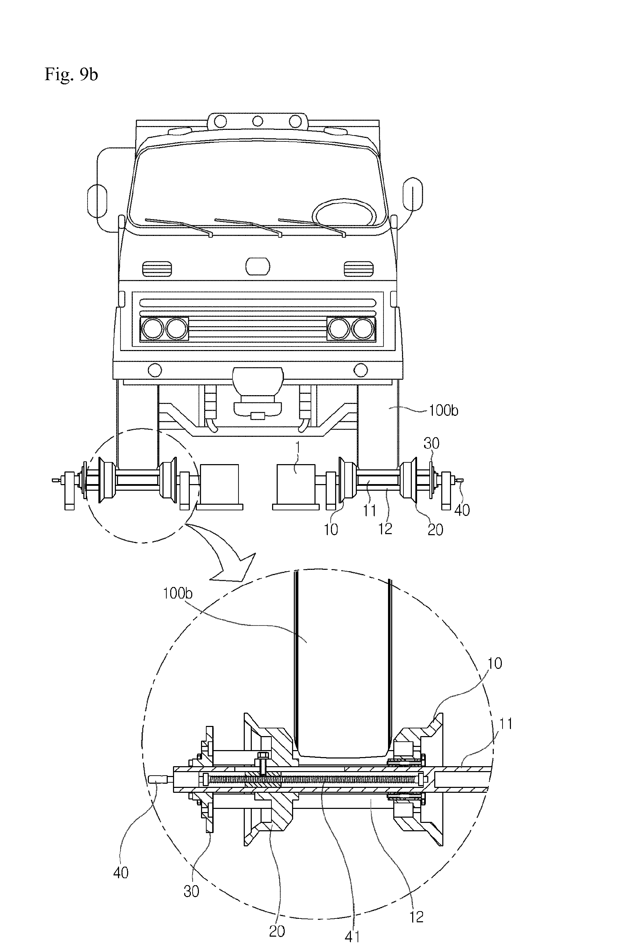

Referring to FIGS. 9A and 9B as an example, in the case of a vehicle with narrow tires 100a, in order to adjust the vibration generating wheel for a vehicle according to embodiments to fit the width of vehicle tire 100a, the rotating rod 41 is rotated clockwise to move the moving body 42 and the second fixed wheel 20 toward the first fixed wheel 10 and reduce the distance between the first fixed wheel 10 and the second fixed wheel 20 to fit the width of the vehicle tire 100a. Then, the support rods 12 are rotated by the drive motor 1 to securely apply vibrations to the vehicle tire 100a. Conversely, when a tire 100b has a greater width, the rotating rod 41 is rotated counterclockwise to move the moving body 42 and the second fixed wheel 20 toward the guide disk 30 and increase the distance between the first fixed wheel 10 and the second fixed wheel 20 where the tire 100b is positioned. Thus, vibrations can easily and securely be applied to large vehicles with wide tires 100b.

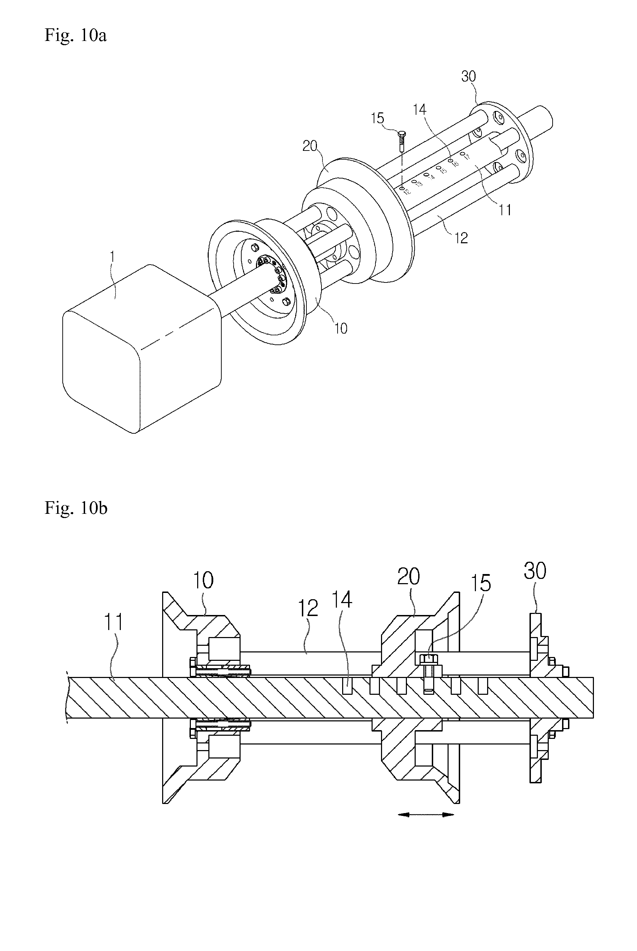

FIGS. 10A and 10B illustrate other embodiments for more easily moving a second fixed wheel 20 along a rotating shaft 11 between a first fixed wheel 10 and a guide disk 30 according to the width of a tire 100. Adjusting holes 14 are defined at predetermined intervals in the rotating shaft 11, a fixing hole is defined in the second fixed wheel 20, and the fixing hole of the second fixed wheel 20 is aligned with an adjusting hole 14 that corresponds to the width of the tire 100, so that a fixing screw 15 or fixing pin, etc. fixes the second fixed wheel 20 to the rotating shaft 11.

Specifically, the adjusting holes 14 are defined in one-inch increments along the rotating shaft 11 according to standard sizing of tires 100 in inch units, and therefore, in the case of a tire 100 that is 14 inches wide, for example, the second fixed wheel 20 is fixed at the fourteenth adjusting hole 14 from the first fixed wheel 10, from among the adjusting holes 14 defined in the rotating shaft 11.

Therefore, the second fixed wheel 20 may be moved and fixed on the rotating shaft 11 in accordance with the width of a tire 100 without having to use separate moving means, enabling tires 100 of various sizes to be easily positioned between the first fixed wheel 10 and the second fixed wheel 20.

A vibration generating wheel for a vehicle according to embodiments can control the vibration frequency and vibration force applied to a tire 100 and a vehicle according to the number of support rods 12 on which the tire 100 is positioned and rotating speed, and can securely apply vibrations to a vehicle and tire 100 while preventing dangerous movement of the vehicle, by supporting/protecting a vehicle tire 100 at either side, through adjusting the distance between the first fixed wheel 10 and the second fixed wheel 20 according to the distance between tires 100 and the width of a tire 100.

Also, by applying vibrations to a tire 100 under the load of the vehicle, vibrations can be applied simultaneously to not only the tire 100, but also the vehicle to induce vibration-related noise heard inside the cabin from various components.

A vibration generating wheel for a vehicle according to embodiments can control the vibration frequency and vibration force applied to a tire and a vehicle according to the number of support rods supporting the tire and the rotating speed of the support rods.

Also, because the distance between a first fixed wheel and a second fixed wheel, that are disposed at either side of a tire to prevent dislodgment of the tire, can be adjusted, vibrations can be applied to a variety of vehicle and tire sizes, regardless of vehicle size and tire width.

Further, because vibrations are applied to a tire under the load of the vehicle, vibrations can be applied simultaneously to not only the tire, but also the vehicle to induce vibration-related noise heard inside the cabin from various components.

While the invention has been shown and described with reference to certain preferred embodiments thereof, it will be understood by those skilled in the art that various changes in form and details may be made therein without departing from the spirit and scope of the invention as defined by the appended claims. Therefore, the scope of the invention is defined not by the detailed description of the invention but by the appended claims, and all differences within the scope will be construed as being included in the present invention.

## Claims

1. A vibration generating wheel for a vehicle, the vibration generating wheel comprising:
a rotating shaft connected to a drive motor;
a first fixed wheel formed on the rotating shaft;
a second fixed wheel formed on the rotating shaft at a predetermined distance apart from the first fixed wheel; and
at least 3 support rods formed between the first fixed wheel and the second fixed wheel to support a vehicle tire, and apply vibrations to the tire by rotating in concert with the first fixed wheel and the second fixed wheel.

2. The vibration generating wheel for a vehicle of claim 1, further comprising a guide disk disposed on the rotating shaft at a predetermined distance from the second fixed wheel, wherein the supporting rods are formed between the first fixed wheel and the guide disk, and the second fixed wheel is moved between the first fixed wheel and the guide disk by moving means, to adjust a distance between the first fixed wheel and the second fixed wheel according to a width of the tire.

3. The vibration generating wheel for a vehicle of claim 2, wherein the moving means comprises:
a rotating rod inserted into a hollow inside of the rotating shaft, and defining screw threads in an outer periphery thereof; and
a moving body defining a screw hole that is screw-coupled to the rotating rod, and fastened to the second fixed wheel to move the second fixed wheel according to rotation of the rotating rod.

4. The vibration generating wheel for a vehicle of claim 1 or 2, wherein the first fixed wheel and the second fixed wheel comprise sloped peripheral portions that contact either side of the tire, such that when the tire is seated on an upper portion of the first fixed wheel or the second fixed wheel, the tire slides down the sloped peripheral portion and is seated on the support rods between the first fixed wheel and the second fixed wheel.
